# EUROPÄISCHE PATENTSCHRIFT

(11) **EP 3 132 990 B1**
(45) Veröffentlichungstag und Bekanntmachung des Hinweises auf die Patenterteilung: **25.03.2020**
(21) Anmeldenummer: 16183616.8
(22) Anmeldetag: 10.08.2016
(51) Int. Cl.: B62B 3/10, B62B 3/12, A63B 55/60

(54) **GOLFWAGEN**
GOLF CART
CHARIOT DE GOLF

(30) Priorität: 11.08.2015 DE 202015104209 U
(43) Veröffentlichungstag der Anmeldung: 22.02.2017
(73) Patentinhaber: Hillesheim, Björn, 63808 Haibach (DE)
(72) Erfinder: Hillesheim, Björn, 63808 Haibach (DE)
(74) Vertreter: Stoffregen, Hans-Herbert

(56) Entgegenhaltungen:
- EP-A1- 2 371 428
- DE-A1- 3 714 066
- DE-U1- 9 415 259
- DE-U1- 20 015 576
- US-A1- 2011 285 111
- US-A1- 2013 062 865

## Beschreibung

Die Erfindung bezieht sich auf einen Golfwagen mit einem mehrteiligen Rahmen oder Gestell, umfassend zumindest ein oberes Rahmen- oder Gestellteil und ein zu diesem verschwenkbares unteres Rahmen- oder Gestellteil, von dem zwei verschwenkbare Achsschenkel mit mit diesen lösbar verbindbaren Seitenrädern ausgehen.

Ein entsprechender Golfwagen ist z. B. der DE 10 2008 045 104 A4 zu entnehmen. Der Golfwagen besteht aus drei als Rahmenstücke bezeichneten Gestellteile, die zueinander in einem Umfang verschwenkbar sind, dass die Rahmenstücke im zusammengeklappten Zustand des Golfwagens aufeinanderliegen, also etwa parallel zueinander ausgerichtet sind. Zum Zusammenklappen des Golfwagens sind die Achsschenkel zunächst nur in Richtung einer gedachten Aufstandsfläche der Räder gegenüber dem Rahmen verschwenkbar, um danach zur Positionierung im Wesentlichen parallel zu dem Rahmen verdreht zu werden. Zuvor können die Seitenräder entfernt werden.

In der DE 200 19 137 U1 wird ein Golfwagen beschrieben, der vier Räder umfasst, und zwar zwei Seitenräder und zwei Vorderräder. Die Seitenräder sind mit dem Gestell des Golfwagens über Lagerstangen verbunden, die über parallelogrammartig wirkende Radtrag- oder Lagerstangen verbunden sind, um beim Zusammenklappen des Golfwagens diese zu dem Gestell auszurichten.

Seitenräder eines Golfwagens nach der DE 20 2005 005 575 A1 sind über Dreh- / Schwenkgelenke mit dem Gestell des Golfwagens verbunden, um beim Zusammenlegen des Golfwagens die Gestellteile sowie die Achsschenkel parallel zueinander ausrichten zu können.

Ein zwei Seitenräder sowie ein Vorderrad aufweisender Golf-Caddy gemäß der DE 20 2015 100 460 U1 hat im Rahmen Druckaktuatoren integriert, um ein Zusammenlegen zu erleichtern.

Die US 2015/0028568 A1 sowie die EP 2 907 554 A1 beziehen sich auf einen Golfwagen mit drei Rädern.

Ein dreirädriger Golfwagen ist auch der US 2011/0285111 A1 zu entnehmen, dessen Räder ein Profil aufweisen, das im Schnitt eine Dachform aufweist. Ein entsprechendes Profil ist auch dem vier Räder aufweisenden Golfwagen nach der US 2013/0062865 A1 zu entnehmen.

Der vorliegenden Erfindung liegt die Aufgabe zugrunde, einen Golfwagen der eingangs genannten Art so weiterzubilden, dass neben einer einfachen Handhabung sichergestellt ist, dass der Golfwagen bei Nutzung eine hohe Stabilität aufweist, im zusammengelegten Zustand jedoch überaus kompakt ist.

Zur Lösung der Aufgabe sieht die Erfindung vor, dass die Seitenräder einen negativen Sturz besitzen, und dass die eine Lauffläche bildende Umfangsfläche jedes Seitenrades die Form eines Konus mit innenseitig geringerem Durchmesser als außenseitig aufweist, und dass jeder Achsschenkel entlang Innenseite des Seitenrades verläuft. Die Achse, um die jedes Seitenrad sich dreht, verläuft geneigt zu dem Untergrund, auf dem der Golfwagen verfahren wird.

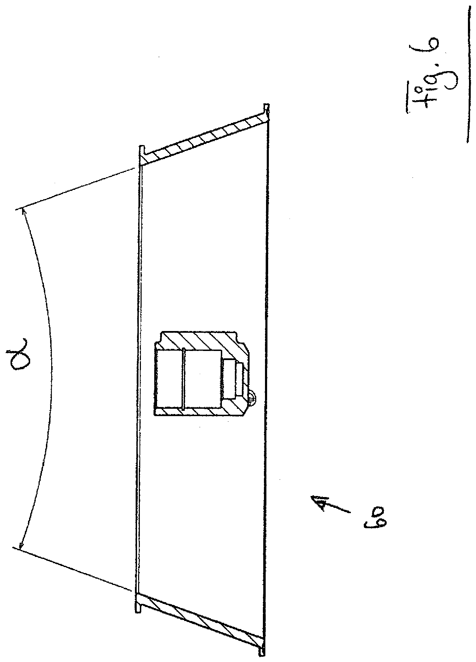

Durch die erfindungsgemäße Lehre ergibt sich die Möglichkeit, dass ungeachtet eines relativ geringen Abstandes der Achsschenkel eine hohe Standbreite erzielbar ist, da zum einen die Achsschenkel entlang den Innenseiten der Seitenräder verlaufen und zum anderen diese umfangsseitig die Form eines Konus aufweisen, wodurch sich ein negativer Sturz ergibt, so dass eine große Standfläche geboten wird. Dabei ist insbesondere vorgesehen, dass der Konus (s. Fig. 6) einen Winkel α mit 20° ≤ α ≤ 40°, insbesondere α = 30° einschließt. Gegebenenfalls kann der Winkel auch eingestellt werden.

Die Breite A eines jeden Seitenrades, also die Länge bzw. maximaler Abstand, mit der das Rad auf einem Untergrund Kontakt hat, beläuft sich vorzugsweise zwischen75 mm und 105 mm.

Der Außendurchmesser des Rades sollte zwischen 300 mm und 380 mm liegen.

Der maximale Abstand S zwischen den Außenrändern der Seitenränder sollte betragen 800 mm ≤ S ≤ 880 mm.

Durch die Abmessungen ergibt sich eine besonders gute Standfestigkeit.

Um ein problemloses Ausrichten der Achsschenkel zu dem Rahmen oder Gestell - nachstehend aus Gründen der Einfachheit nur Gestell genannt - zu ermöglichen, sieht die Erfindung des Weiteren vor, dass jeder Achsschenkel über ein Dreh- / Schwenkgelenk mit dem unteren Gestellteil verbunden ist. Dreh- / Schwenkgelenk bedeutet dabei, dass beim Verschwenken der Achsschenkel gleichzeitig deren Abstand zueinander verringert wird, so dass ein vorzugsweise paralleles Ausrichten zu dem von dem unteren Gestellteil ausgehenden Gestellteil bei zusammengeklapptem Golfwagen gegeben ist. Dabei ist vorzugsweise vorgesehen, dass von dem unteren Gestellteil ein mittleres Gestellteil ausgeht, das gelenkig sowohl mit dem unteren Gestellteil als auch mit dem oberen Gestellteil verbunden ist.

Das Dreh-/Schwenkgelenk wird dadurch realisiert, dass sich der Achsschenkel an einer schiefen Ebene abstützt, so dass ein Drehen gleichzeitig das gewünschte Schwenken bewirkt.

Erfindungsgemäß ist insbesondere vorgesehen, dass bei zusammengeklapptem Golfwagen das untere und obere Gestellteil - bei Vorhandensein eines mittleren Gestellteils auch dieses -, sowie die Achsschenkel parallel oder im Wesentlichen parallel zueinander verlaufen.

Von dem oberen Gestellteil geht ein vorzugsweise höhenverstellbarer Handgriff aus, der sich insbesondere dadurch auszeichnet, dass dieser aus einem quer zur von den Gestellteilen aufgespannten Ebene verlaufenden Mittelabschnitt und von dessen Enden ausgehenden Endabschnitten besteht, die ihrerseits mit ihren Enden einander zugewandt sind. Dabei kann der Handgriff eine Ebene aufspannen, die zur Längsachse des oberen Gestellteils einen spitzen Winkel einschließt. Durch die diesbezügliche Form ergibt sich eine vorteilhafte Ergonometrie, so dass das Schieben des Golfwagens nicht zu einer Ermüdung bzw. für das Golfspiel nachteilige Beanspruchung der Arme führt.

Auch wenn der Golfwagen allein mit zwei Seitenrädern handhabbar wäre, ist insbesondere vorgesehen, dass vom distalen Bereich des unteren Gestellteils und einem mit diesem verbundenen Gestellteil ein Vorderrad ausgeht, das lösbar mit einem Achsschenkel verbunden sein kann, dessen Längsachse vorzugsweise parallel zur Längsachse des unteren Gestellteils verläuft. Somit ist der Golfwagen auf drei Rädern abstützbar. Die Roll- oder Fahrfläche, auch Abstützfläche genannt, des vorderen Rades verläuft parallel zu dessen Achse.

Unabhängig hiervon sollten die zueinander verschwenkbaren Gestellteile durch Verrasten gegeneinander fixierbar sein. Dabei besteht die Möglichkeit, dass das den Handgriff aufweisende obere Gestellteil in unterschiedlichen Winkeln zu dem angrenzenden Gestellteil verrastbar ist. Unterschiedliches Verrasten schließt auch ein, dass zwischen den Gestellteilen ein Bauteil ausgetauscht wird, über das die gewünschte Winkelstellung ermöglicht wird, um den Golfwagen für Personen unterschiedlicher Größen nutzen zu können.

Die Gestellteile werden im Wesentlichen durch Hohlprofile - insbesondere rohr- oder rechteckförmige Hohlprofile - gebildet, wobei jedes Gestellteil durch ein einziges Hohlprofil gebildet wird. Als Material wird insbesondere Aluminium oder höherfester Stahl oder anderes geeignetes Material verwendet. Die Enden der Hohlprofile weisen die Verbindungselemente einerseits zu angrenzenden Gestellteilen und andererseits zu dem Handgriff bzw. Achsschenkel für das Vorderrad auf.

Des Weiteren geht von dem unteren Gestellteil ein Querholm aus, in dessen jeweiligem Endbereich das Dreh- / Schwenkgelenk verläuft, über das der jeweilige Achsschenkel mit dem Gestell verbunden wird.

Um ein Golfbag aufzunehmen, können vom proximalen, also handgriffseitigen Bereich des oberen Gestellteils oder bei Vorhandensein eines mittleren Gestellteils von dessen proximalem Bereich und vom distalen Bereich des unteren Gestellteils jeweils eine Halterung ausgehen, wobei ergänzend im distalen Bereich des unteren Gestellteils ein von diesem abragender Anschlag ausgeht, der mit dem Boden eines Golfbags zusammenwirkt. Dieser Anschlag kann verstellbar bzw. verschwenkbar ausgebildet sein, um eine Anpassung an Golfbags unterschiedlicher Größen zu ermöglichen.

Insbesondere ist die Erfindung gekennzeichnet durch einen Golfwagen mit einem mehrteiligen Rahmen oder Gestell umfassend zumindest ein oberes Rahmen- oder Gestellteil und ein zu diesem verschwenkbares unteres Rahmen- oder Gestellteil, von dem zwei verschwenkbare Achsschenkel mit mit diesen lösbar verbindbaren Seitenrädern ausgehen, wobei die Seitenräder einen negativen Sturz besitzen.

Ein entsprechender Golfwagen ist auch durch Merkmale gekennzeichnet, wie diese zuvor erläutert worden sind bzw. sich aus dem Ausführungsbeispiel ergeben.

Weitere Einzelheiten, Vorteile und Merkmale der Erfindung ergeben sich nicht nur aus den Ansprüchen, den diesen zu entnehmenden Merkmalen - für sich und/oder in Kombination - sondern auch aus der nachfolgenden Beschreibung eines der Zeichnungen zu entnehmenden bevorzugten Ausführungsbeispiels.

Es zeigen:

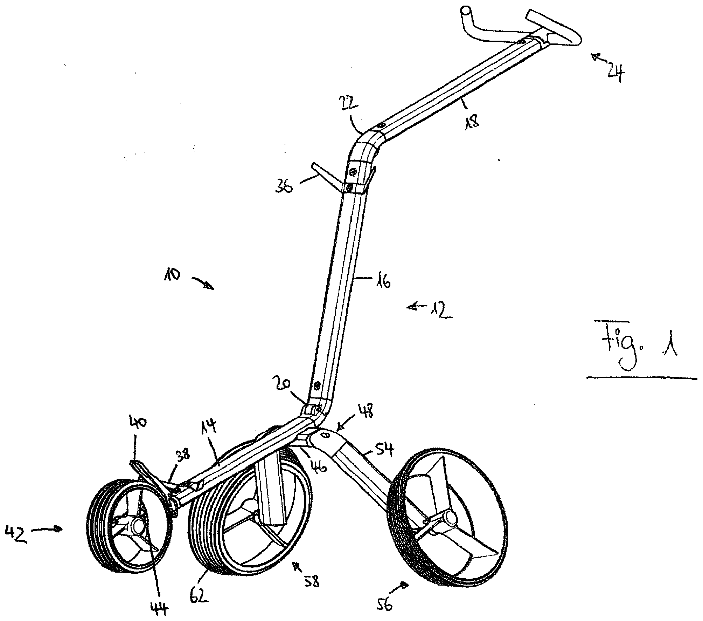

- Fig. 1: eine erste perspektivische Darstellung eines Golfwagens,

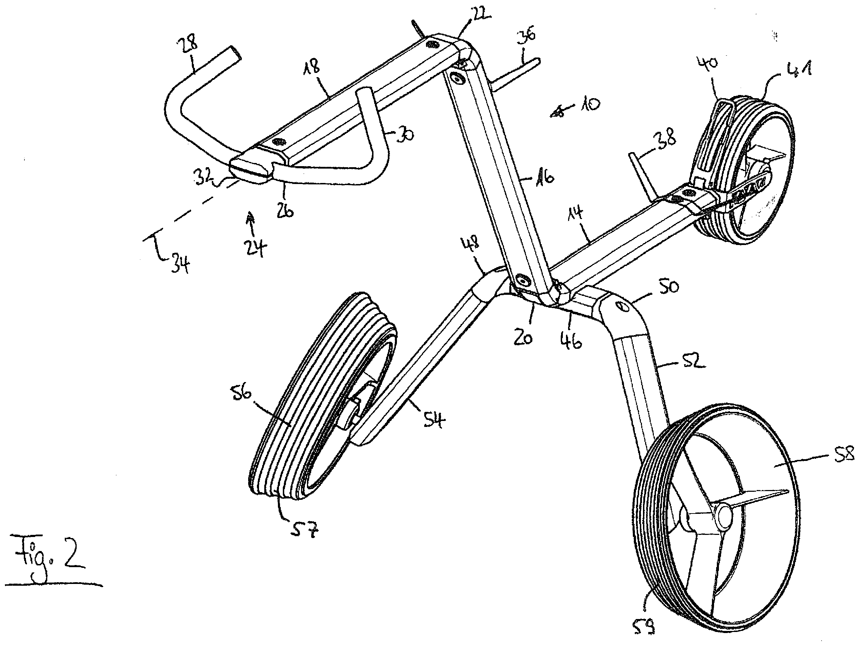

- Fig. 2: eine weitere perspektivische Darstellung des Golfwagens gemäß Fig. 1,
- Fig. 3: der Golfwagen gemäß Fig. 1 und 2, betrachtet von der Rückseite,
- Fig. 4: der Golfwagen gemäß Fig. 1 bis 3 in Draufsicht in zusammengeklappter Stellung,
- Fig. 5: der Golfwagen gemäß Fig. 1 bis 4 im zusammengeklappten Zustand in seitlicher Ansicht und
- Fig. 6: im Schnitt eine Felge eines Seitenrades des Golfwagens der Fig. 1 - 5.

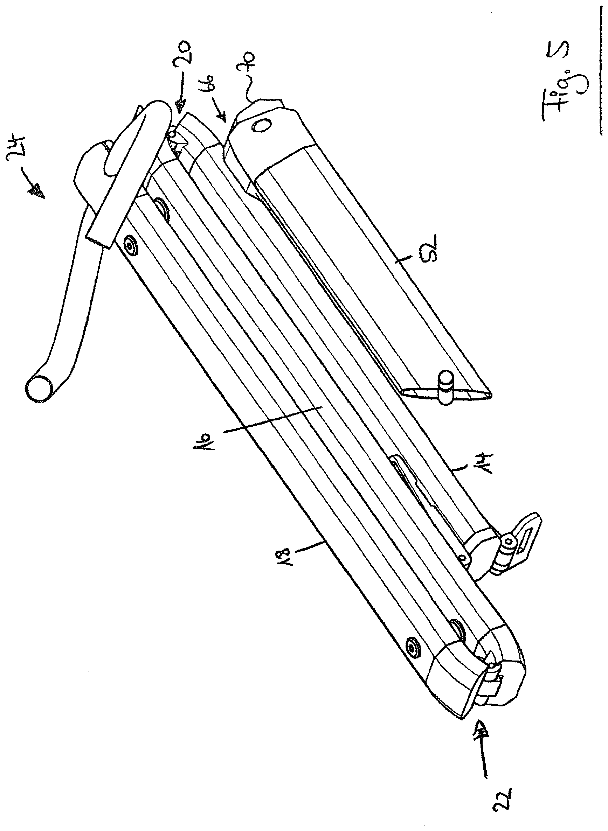

In den Figuren, in denen grundsätzlich für gleiche Elemente gleiche Bezugszeichen verwendet werden, ist ein Golfwagen 10 rein prinzipiell dargestellt, der ein Gestell 12 aufweist, das im Ausführungsbeispiel aus drei Gestellteilen besteht, und zwar einem unteren Gestellteil 14, einem mittleren Gestellteil 16 und einem oberen Gestellteil 18. Bei den Gestellteilen 14, 16, 18 handelt es sich um insbesondere aus z. B. Aluminium oder höherfestem Stahl bestehende rohr- bzw. vierkantförmige Hohlprofile, die über Gelenke 20, 22 miteinander verbunden und über die Gelenke 20, 22 verschwenkbar sind. Hierdurch wird die Möglichkeit geschaffen, dass die Gestellteile 14, 16, 18 in einem Umfang zusammengeklappt werden, dass sich eine kompakte Einheit dadurch ergibt, dass die Gestellteile 14, 16, 18 aufeinanderliegen bzw. parallel zueinander ausgerichtet sind, wie der Fig. 5 zu entnehmen ist.

Im aufgestellten Zustand sind die Gestellteile 14, 16, 18 zueinander verrastet, so dass ein unkontrolliertes Verschwenken nicht möglich ist. Erst durch Lösen einer Arretierung mittels z. B. eines Druckknopfs besteht die Möglichkeit, die Verrastung aufzuheben, um somit die Gestellteile 14, 16, 18 zueinander zu verschwenken.

Von dem oberen Gestellteil 18 geht ein Handgriff 24 aus, der sich aus einem Basis- oder Mittelabschnitt und abgewinkelten Endabschnitten 28, 30 zusammensetzt. Der Basisabschnitt 26 geht von einer Aufnahme 32 aus, die in das obere Gestellteil 18 einschiebbar und in diesem fixierbar ist.

Die Endabschnitte 28, 30 haben einen Verlauf derart, dass diese in Richtung einer von dem Gestell 12 aufgespannten Ebene verlaufen, also aufeinander zu gerichtet sich erstrecken, wie die zeichnerische Darstellung vermittelt. Des Weiteren spannen die Endabschnitte 28, 30 eine Ebene auf, die einen spitzen Winkel zur Längsachse 34 des oberen Gestellteils 18 einschließt. Hierdurch ergibt sich eine ergometrische Form, die ein zur Ermüdung nicht führendes Betätigen des Golfwagens 10 führt.

Vom proximalen Bereich des mittleren Gestellteils 16, also dem an dem oberen Gestellteil 18 angrenzenden Bereich, geht eine erste Halterung 36 für ein Golfbag aus. Eine zweite Halterung 38 geht vom distalen Bereich des unteren Gestellteils 14 aus, also von dem in Bezug auf den Handgriff 24 entfernt liegenden Ende. Ferner verläuft zwischen der Halterung 38 und dem Ende des unteren Gestellteils 14 ein Anschlag 40, der verschwenkbar ausgebildet ist und an dem sich der Boden eines Bags abstützen kann.

Mit dem unteren Gestellteil 14 ist insbesondere ein einziges Vorderrad 42 verbunden, und zwar über eine Radstütze bzw. einen Achsschenkel 44. Dabei wird im Ausführungsbeispiel das Vorderrad 24 einseitig gelagert, gleichwenn bevorzugterweise eine zweiseitige Lagerung erfolgen sollte. Das Rad 42 ist dabei vorzugsweise derart zu dem unteren Gestellteil 14 ausgerichtet, dass dieses von der Längsachse des unteren Gestellteils mittig durchsetzt wird.

Die Lauf- oder Rollfläche 41 des Vorderrads 42 verläuft parallel zu dessen Achse.

Von dem unteren Gestellteil 14 geht des Weiteren ein Querholm 46 aus, der über Dreh-/Schwenkgelenke 48, 50 mit Achsschenkeln 52, 54 verbunden ist, von denen lösbar Seitenräder 56, 58 ausgehen, die einen negativen Sturz besitzen. Dieser wird dadurch gebildet, dass die Umfangsfläche und damit die Abroll- oder Lauf- oder Abstützfläche 57, 59 der Räder 56, 58 die Form eines Konus aufweisen, wie selbsterklärend aus den Figuren ersichtlich ist und insbesondere auch durch die Schnittdarstellung einer Felge 60 gemäß Fig. 6 vermittelt wird. Die Schnittdarstellung zeigt die Konusform, wobei der Konuswinkel α im Bereich zwischen 20° und 40° und bevorzugterweise bei 30° liegt.

Die Längsachse des Konus fällt mit der Drehachse des jeweiligen Rades 56, 58 zusammen. Die Drehachse sollte einen Winkel zwischen 10° und 20° zum Untergrund einschließen, auf dem der Golfwagen 10 verfahrbar ist.

Auf der Kegelstumpfumfangsfläche der Felge 60 ist sodann eine aus geeignetem Material wie Kunststoff, Gummi oder Kautschuk bestehende Auflage 62 aufgebracht, die gegebenenfalls profiliert sein kann. Ungeachtet dessen ergibt sich eine Konusform, die den gewünschten negativen Sturz der Räder 56, 58 ermöglicht.

Auch wenn die Achsschenkel 52, 54 innenseitig entlang der Räder 56, 58 verlaufen, also die Achsschenkel 52 ,54 einen nicht sehr großen Abstand aufweisen, ergibt sich durch den negativen Sturz insbesondere der Vorteil, dass die Standbreite des Golfwagens 10 relativ groß ist, so dass der Golfwagen 10 eine hohe Stabilität besitzt. Außerdem ergibt sich der Vorteil, dass die Räder zum Zusammenklappen des Golfwagens 10 problemlos von den Achsschenkeln 52, 54 gelöst werden können.

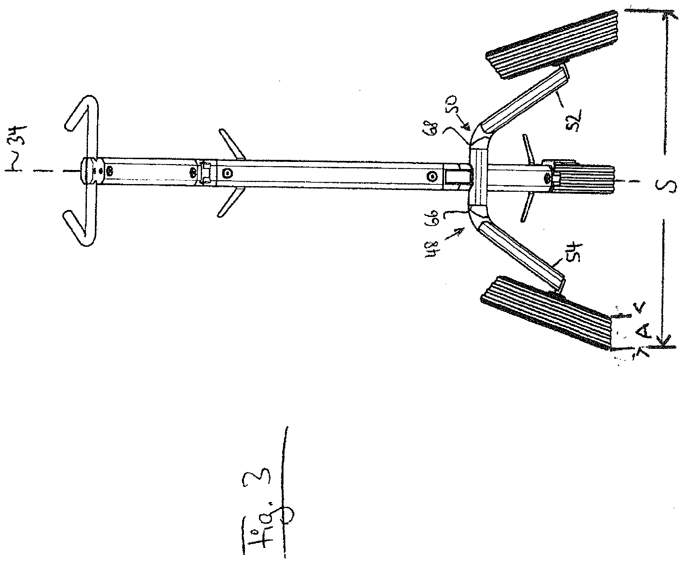

Die Dreh-/Schwenkgelenke 48, 50 weisen aufeinander liegende Flächen auf, die in Bezug auf die von den Gestellteilen 14, 16, 18 aufgespannte Ebene schräg verlaufen, wie sich insbesondere aus den Fig. 3 - 5 ergibt. In dieser ist der Schnitt der Abstützflächen des Dreh-/Schwenkgelenks 48, 50 mit den Bezugszeichen 66, 68 gekennzeichnet. Eine Abstütz- bzw. Gleitfläche ist in Fig. 5 mit 70 gekennzeichnet.

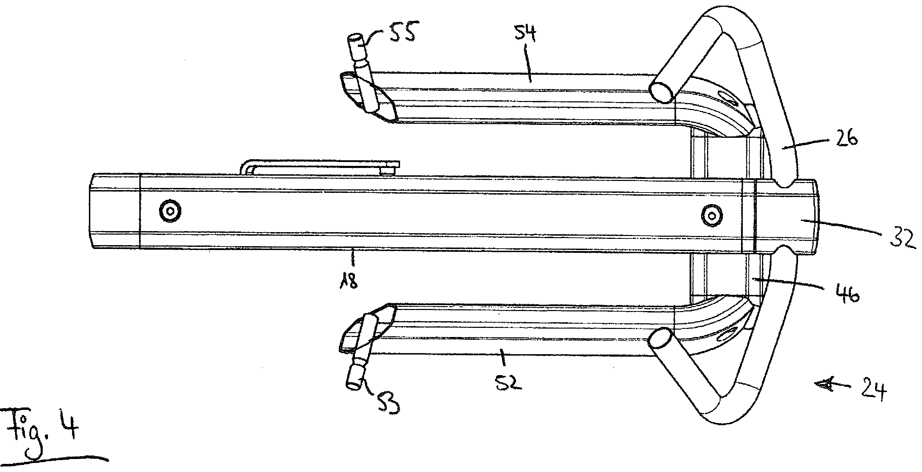

Die aufeinanderliegenden Flächen verlaufen somit unter einem von 90° abweichenden Winkel zur Horizontalen, wenn der Golfwagen 10 selbst auf einer horizontal verlaufenden Ebene abgestellt ist. Die Ebenen werden senkrecht von der Achse durchsetzt, um die die Achsschenkel 52, 54 drehbar ist. Dabei sind die Ebenen derart zur Horizontalen geneigt, dass entsprechend den Darstellungen gemäß der Fig. 4 und 5 die Achsschenkel 52, 54 bei zusammengelegtem Golfwagen 10 parallel oder in etwa parallel zu dem Gestellteil 16 verlaufen können.

Werden die Achsschenkel 52, 54 um die die Dreh-/Schwenkgelenke 48, 50 durchsetzende Achse gedreht, so erfolgt gleichzeitig ein Bewegen der Achsschenkel 52, 54 in Richtung des mittleren Gestellteils 16, um im zusammengeklappten Zustand parallel zu den parallel zueinander verlaufenden Gestellteilen 14, 16, 18 ausgerichtet zu sein, wie sich aus den Fig. 4 und 5 ergibt.

Wie sich aus den Fig. 4 und 5 des Weiteren ergibt, sind die Räder 56, 58 um durch von distalen Enden der Achsschenkel 52, 54 ausgehende Zapfen oder Wellenstümpfe drehbar, auf dem diese verrastbar sind.

Der Golfwagen 10 ist von Hand verfahrbar, d.h. ohne elektrischen Antrieb nutzbar. Es besteht auch die Möglichkeit, den Golfwagen 10 elektrisch angetrieben auszubilden. Hierzu ist insbesondere vorgesehen, dass jedes Seitenrad 56, 58 über einen gesonderten Elektromotor angetrieben wird, die untereinander elektronisch synchronisiert sind.

## Patentansprüche

1. Golfwagen (10) mit einem mehrteiligen Rahmen oder Gestell umfassend zumindest ein oberes Rahmen- oder Gestellteil (18) und ein zu diesem verschwenkbares unteres Rahmen- oder Gestellteil (14), von dem zwei verschwenkbare Achsschenkel (52, 54) mit mit diesen lösbar verbindbaren Seitenrädern (56, 58) ausgehen,
**dadurch gekennzeichnet,**
**dass** die Seitenräder (56, 58) einen negativen Sturz besitzen, und
**dass** die eine Lauffläche bildende Umfangsfläche jedes Seitenrades (56, 58) die Form eines Konus mit innenseitig geringerem Durchmesser als außenseitig aufweist, und dass jeder Achsschenkel (52, 54) entlang Innenseite des Seitenrades verläuft.

2. Golfwagen nach Anspruch 1,
**dadurch gekennzeichnet,**
**dass** der Konus einen Winkel α mit 20° ≤ α ≤ 40°, insbesondere α = 30° einschließt, wobei gegebenenfalls der Konus verstellbar ist.

3. Golfwagen nach Anspruch 1 oder 2,
**dadurch gekennzeichnet,**
**dass** bei zusammengeklapptem Golfwagen (10) das untere und obere Rahmen- oder Gestellteil (14, 18) sowie die Achsschenkel (52, 54) parallel oder im Wesentlichen parallel zueinander verlaufen.

4. Golfwagen nach zumindest einem der vorhergehenden Ansprüche,
**dadurch gekennzeichnet,**
**dass** von dem oberen Rahmen- oder Gestellteil (18) ein höhenverstellbarer Handgriff (24) ausgeht, wobei vorzugsweise das den Handgriff (24) aufweisende obere Rahmen- oder Gestellteil (18) in unterschiedlichen Winkeln zu dem angrenzenden Rahmen- oder Gestellteil (16) fixierbar ist.

5. Golfwagen nach zumindest einem der vorhergehenden Ansprüche,
**dadurch gekennzeichnet,**
**dass** zwischen dem unteren und dem oberen Rahmen- oder Gestellteil (14, 18) ein zu diesen verschwenkbares mittleres Rahmen- oder Gestellteil (16) verläuft.

6. Golfwagen nach zumindest einem der vorhergehenden Ansprüche,
**dadurch gekennzeichnet,**
**dass** vom distalen Bereich des unteren Rahmen- oder Gestellteils (14) ein Vorderrad (42) ausgeht, das gegebenenfalls lösbar mit einem Achsschenkel (44) verbunden ist.

7. Golfwagen nach zumindest einem der vorhergehenden Ansprüche,
**dadurch gekennzeichnet,**
**dass** die Längsachse des unteren Rahmen- oder Gestellteils (14) mittig das Vorderrad (42) durchsetzt.

8. Golfwagen nach zumindest Anspruch 1,
**dadurch gekennzeichnet,**
**dass** jeder Achsschenkel (52, 54) über ein Dreh-Schwenkgelenk (48, 50) mit dem unteren Rahmen- oder Gestellteil (14) verbunden ist, dass das Dreh-Schwenkgelenk (48, 50) aufeinanderliegende Flächen aufweist, die in Bezug auf eine von den Gestellteilen (12, 14, 16) aufgespannten Ebene schräg verlaufen derart, dass beim Verschwenken des Achsschenkels (52, 54) in Richtung des Rahmens oder Gestells (12) seitlicher Abstand des Achsschenkels zu dem Rahmen oder Gestell abnimmt.

9. Golfwagen nach zumindest einem der vorhergehenden Ansprüche,
**dadurch gekennzeichnet,**
**dass** die Rahmen- oder Gestellteile (14, 16, 18) durch Verrastung gegeneinander fixierbar sind.

10. Golfwagen nach zumindest einem der vorhergehenden Ansprüche,
**dadurch gekennzeichnet,**
**dass** der Handgriff (24) einen quer, insbesondere senkrecht, zur von dem Rahmen- oder Gestell (12) aufgespannten Ebene verlaufenden Basisabschnitt (26) und von dessen Enden ausgehende Endabschnitte (28, 30) umfasst, die jeweils mit ihren Enden einander zugewandt sind, wobei die Endabschnitte (28, 30) eine Ebene aufspannen, die zur Längsachse (34) des oberen Rahmen- oder Gestellteils (18) einen spitzen Winkel einschließt.

11. Golfwagen nach zumindest einem der vorhergehenden Ansprüche,
**dadurch gekennzeichnet,**
**dass** jedes Rahmen- oder Gestellteil (14, 16, 18) durch oder im Wesentlichen durch ein insbesondere rechteckförmiges Hohlprofil, insbesondere aus Aluminium, gebildet ist.

12. Golfwagen nach zumindest einem der vorhergehenden Ansprüche,
**dadurch gekennzeichnet,**
**dass** von dem unteren Rahmen- oder Gestellteil (14) ein Querholm (46) ausgeht, in dessen jeweiligem Endbereich das Dreh-Schwenkgelenk (48, 50) verläuft.

13. Golfwagen nach zumindest einem der vorhergehenden Ansprüche,
**dadurch gekennzeichnet,**
**dass** vom proximalen Bereich des unteren Rahmen- oder Gestellteils (14) der Querholm (46) ausgeht.

14. Golfwagen nach zumindest einem der vorhergehenden Ansprüche,
**dadurch gekennzeichnet,**
**dass** vom proximalen Bereich des mittleren Rahmen- oder Gestellteils (16) und vom distalen Bereich des unteren Rahmen- oder Gestellteils (14) eine Halterung (36, 38) ausgeht.

15. Golfwagen nach zumindest einem der vorhergehenden Ansprüche,
**dadurch gekennzeichnet,**
**dass** zwischen der von dem unteren Rahmen- oder Gestellteil (14) ausgehenden Halterung (38) und dem Vorderrad (42) ein vorzugsweise verstellbarer Anschlag (40) verläuft.

## Claims

1. Golf cart (10) with a multiple-part frame comprising at least one upper frame part (18) and a lower frame part (14) swivelable thereto and from which extend two swivelable stub axles (52, 54) with side wheels (56, 58) detachably connectable thereto,
wherein
the side wheels (56, 58) have a negative camber, the circumferential surface of each side wheel (56, 58) forming a tread has the form of a cone with a lower diameter on the inside than on the outside, and each stub axle (52, 54) extends along the inside of the side wheel.

2. Golf cart according to claim 1,
wherein
the cone forms an angle α with 20° ≤ α ≤ 40°, in particular α = 30°, where the cone may be adjustable.

3. Golf cart according to claim 1 or 2,
wherein
the lower and upper frame parts (14, 18) and the stub axles (52, 54) are parallel or substantially parallel to one another when the golf cart (10) is folded up.

4. Golf cart according to at least one of the preceding claims,
wherein
a height-adjustable handle (24) extends from the upper frame part (18), where preferably the upper frame part (18) having the handle (24) is fixable at different angles to the adjoining frame part (16).

5. Golf cart according to at least one of the preceding claims,
wherein
between the lower and the upper frame parts (14, 18) is a middle frame part (16) swivelable thereto.

6. Golf cart according to at least one of the preceding claims,
wherein
a front wheel (42) which may be detachably connected to a stub axle (44) extends from the distal area of the lower frame part (14).

7. Golf cart according to at least one of the preceding claims,
wherein
the longitudinal axis of the lower frame part (14) passes through the center of the front wheel (42).

8. Golf cart according to at least claim 1,
wherein
each stub axle (52, 54) is connected via a rotary/swivel joint (48, 50) to the lower frame part (14), said rotary/swivel joint (48, 50) has surfaces contacting one another which run obliquely relative to a plane formed by the frame parts (12, 14, 16) such that when the stub axle (52, 54) is swiveled in the direction of the frame part (12) the lateral distance of the stub axle from the frame decreases.

9. Golf cart according to at least one of the preceding claims,
wherein
the frame parts (14, 16, 18) are fixable by engagement with one another.

10. Golf cart according to at least one of the preceding claims,
wherein
the handle (24) comprises a basic section (26) running transversely, in particular vertically, to the plane formed by the frame (12) and end sections (28, 30) extending from its ends and facing one another with their ends, where said end sections (28, 30) form a plane which is at an acute angle to the longitudinal axis (34) of the upper frame part (18).

11. Golf cart according to at least one of the preceding claims,
wherein
each frame part (14, 16, 18) is formed by or substantially by a hollow section, in particular rectangular and in particular of aluminum.

12. Golf cart according to at least one of the preceding claims,
wherein
a cross-piece (46) whose respective end area contains the rotary/swivel joint (48, 50) extends from the lower frame part (14).

13. Golf cart according to at least one of the preceding claims,
wherein
the cross-piece (46) extends from the proximal area of the lower frame part (14).

14. Golf cart according to at least one of the preceding claims,
wherein
a mounting (36, 38) extends from the proximal area of the middle frame part (16) and from the distal area of the lower frame part (14).

15. Golf cart according to at least one of the preceding claims,
wherein
a preferably adjustable stop (40) projects between the mounting (38) extending from the lower frame part (14) and the front wheel (42).

## Revendications

1. Chariot de golf (10) avec un cadre ou châssis à plusieurs éléments comprenant au moins une partie supérieure du cadre ou châssis (18) et une partie inférieure du cadre ou châssis (14) basculable par rapport à celle-ci, dont partent deux porte-fusées basculables (52, 54) avec des roues latérales (56, 58) reliables à ceux-ci de manière détachable,
**caractérisé en ce**
**que** les roues latérales (56, 58) possèdent un carrossage négatif, et que la surface circonférentielle formant une bande de roulement de chaque roue latérale (56, 58) présente la forme d'un cône avec un diamètre côté intérieur inférieur à celui côté extérieur, et que chaque porte-fusée (52, 54) s'étend le long du côté intérieur de la roue latérale.

2. Chariot de golf selon la revendication 1,
**caractérisé en ce**
**que** le cône forme un angle a tel que 20° ≤ α ≤ 40°, notamment α = 30°, sachant que le cas échéant, le cône est réglable.

3. Chariot de golf selon la revendication 1 ou 2
**caractérisé en ce**
**que** lorsque le chariot de golf (10) est replié, les parties inférieure et supérieure du cadre ou châssis (14, 18) ainsi que les porte-fusées (52, 54) sont parallèles ou essentiellement parallèles entre eux.

4. Chariot de golf selon au moins une des revendications précédentes,
**caractérisé en ce**
**qu'**une poignée (24) réglable en hauteur part de la partie supérieure du cadre ou châssis (18), sachant que, de préférence, la partie supérieure du cadre ou châssis (18) présentant la poignée (24) est fixable dans différents angles par rapport à la partie du cadre ou châssis adjacente (16).

5. Chariot de golf selon au moins une des revendications précédentes,
**caractérisé en ce**
**qu'**entre la partie inférieure et la partie supérieure du cadre ou châssis (14, 18) s'étend une partie centrale du cadre ou châssis (16) basculable vers celles-ci.

6. Chariot de golf selon au moins une des revendications précédentes,
**caractérisé en ce**
**qu'**une roue avant (42) reliée à un porte-fusée (44), le cas échéant de manière détachable, part de la zone distale de la partie inférieure du cadre ou châssis (14).

7. Chariot de golf selon au moins une des revendications précédentes,
**caractérisé en ce**
**que** l'axe longitudinal de la partie inférieure du cadre ou châssis (14) passe par le milieu de la roue avant (42).

8. Chariot de golf selon au moins la revendication 1,
**caractérisé en ce**
**que** chaque porte-fusée (52, 54) est relié à la partie inférieure du cadre ou châssis (14) par le biais d'une articulation tournante-pivotante (48, 50), que l'articulation tournante-pivotante (48, 50) présente des surfaces superposées qui s'étendent de manière oblique par rapport à un plan sous-tendu par les parties du châssis (12, 14, 16) de telle sorte que lors du basculement du porte-fusée (52, 54) en direction du cadre ou châssis (12), l'écart latéral du porte-fusée par rapport au cadre ou châssis diminue.

9. Chariot de golf selon au moins une des revendications précédentes,
**caractérisé en ce**
**que** les parties du cadre ou châssis (14, 16, 18) sont fixables les unes par rapport aux autres par crantage.

10. Chariot de golf selon au moins une des revendications précédentes,
**caractérisé en ce**
**que** la poignée (24) comprend une section de base (26) s'étendant transversalement, notamment perpendiculairement, au plan sous-tendu par le cadre ou châssis (12) et des sections terminales (28, 30) partant des extrémités de ladite section de base, dont les extrémités sont tournées l'une vers l'autre, sachant que les sections terminales (28, 30) sous-tendent un plan qui forme un angle aigu par rapport à l'axe longitudinal (34) de la partie supérieure du cadre ou châssis (18).

11. Chariot de golf selon au moins une des revendications précédentes,
**caractérisé en ce**
**que** chaque partie du cadre ou châssis (14, 16, 18) est constituée par ou essentiellement par un profilé creux notamment de forme rectangulaire, notamment en aluminium.

12. Chariot de golf selon au moins une des revendications précédentes,
**caractérisé en ce**
**que** de la partie inférieure du cadre ou châssis (14) part une barre transversale (46) dans chacune des zones terminales de laquelle s'étend l'articulation tournante-pivotante (48, 50).

13. Chariot de golf selon au moins une des revendications précédentes,
**caractérisé en ce**
**que** la barre transversale (46) part de la zone proximale de la partie inférieure du cadre ou châssis (14).

14. Chariot de golf selon au moins une des revendications précédentes,
**caractérisé en ce**
**qu'**un support (36, 38) part de la zone proximale de la partie centrale du cadre ou châssis (14) et de la zone distale de la partie inférieure du cadre ou châssis (14).

15. Chariot de golf selon au moins une des revendications précédentes,
**caractérisé en ce**
**qu'**une butée (40) de préférence réglable s'étend entre le support (38) partant de la partie inférieure du cadre ou châssis (14) et la roue avant (42).
